# EUROPEAN PATENT SPECIFICATION

(11) **EP 1 994 211 B1**
(45) Date of publication and mention of the grant of the patent: **18.05.2016**
(21) Application number: 07752201.9
(22) Date of filing: 02.03.2007
(51) Int. Cl.: D03D 27/00, B32B 33/00

(54) **FLOOR COVERING HAVING THERMALLY MODIFIED PATTERNED TEXTILE LAYER**
BODENBELAG MIT THERMISCH MODIFIZIERTER STRUKTURIERTER TEXTILSCHICHT
REVETEMENT DE SOL COMPORTANT UNE COUCHE TEXTILE A MOTIFS MODIFIEE THERMIQUEMENT

(30) Priority: 06.03.2006 US 368760
(43) Date of publication of application: 26.11.2008
(73) Proprietor: Milliken & Company, Spartanburg, South Carolina 29303 (US)
(72) Inventor: CRAIG, Stephen, M., Lagrange, GA 30240 (US); STREETON, Amy, B., Lagrange, GA 30240 (US); BRAZIER, Peter, C., Bedfordshire LU7 OQE (GB); YATES, Robert, V., Jr., Lagrange, GA 30240 (US)
(74) Representative: Hoffmann Eitle
(86) International application number: PCT/US2007/005485
(87) International publication number: WO 2007/103244

(56) References cited:
- WO-A2-03/106158
- GB-A- 1 366 390
- GB-A- 2 102 462
- JP-A- 2006 257 586
- US-A- 5 178 939
- US-A- 5 861 044
- US-A- 5 865 933
- US-A- 5 906 877
- US-A1- 2004 043 184
- US-A1- 2005 053 757
- US-A1- 2006 008 612
- US-A1- 2006 037 154
- US-B2- 6 774 067

## Description

### TECHNICAL FIELD

The present disclosure relates to a floor covering, such as a mat, having a textile upper surface and a flexible backing surface, in which the textile upper surface is patterned to produce a texture differential in the patterned areas. This differential texture produces a harsh hand in the finished product, which provides scraping functionality to mats used in building entryways. The textile upper surface is patterned by the selective and patternwise application of heat to the subject yarns, such as by directed streams of hot air or by heated rolls, and the pattern is durable to use and laundering due to the thermal modification of the treated yarns. The backing may be rubber, rubber crumb, polyvinyl chloride (PVC), latex, a flat textile material, or other similar flexible materials that are durable to industrial laundering.

### BACKGROUND

Floor coverings, and particularly mats, have long been utilized to facilitate the cleaning of the bottom of people's shoes, particularly in areas of high pedestrian traffic, such as doorways. Moisture, dirt, sand, and debris from outdoor areas easily adhere to footwear, particularly in inclement weather and particularly in areas of grass, mud, snow, or the like. Such unwanted and potentially floor-staining contaminants need to be removed from footwear before being carried to interior areas of a building.

As will be appreciated, floor mats by their nature must undergo frequent washings and dryings to remove the dirt deposited thereon during use. These mats may be rented from service entities that retrieve the soiled mats on a regular basis and that provide clean mats as replacements. The soiled mats are thereafter cleaned and dried in an industrial laundering process and then sent back into circulation.

Floor and/or dust mats, in particular those having a tufted carpet pile partially comprised of coarse monofilament fibers, have been developed to provide an easy manner of cleaning the soles of users' footwear simply by scraping the footwear against such a stiff article. Examples of such floor mats using coarse monofilament fibers are exemplified in US Patent 1,008,618 to Skowronski et al.; US Patent 4,045,605 to Breens et al.; US Patent 4,353,944 to Tarui; US Patent 6,468,622 to Combs et al.; and US Patent 4,820,566 to Heine et al and US Patent 5865933 being the closest prior art.

The problem with using monofilaments to provide the scraping functionality to the mat is three-fold. First, such large fibers are fairly expensive, as compared with traditional multi-filament carpet yarns. In addition, such filaments are difficult to dye, leading to the use of solution dyeing techniques to color these filaments. While advantageous in some instances, this property limits the aesthetic properties of the resulting mats and further causes the manufacturer to maintain a larger-than-desired inventory to quickly fulfill customer needs. Finally, a significant problem with monofilaments is that they generally have poor tuft bind, meaning that they are readily removed from the backing substrate. To combat this problem, manufacturers have "locked" the monofilament tufts in place by coating the backing substrate with latex, which adds further material and manufacturing costs to the finished product.

The present mat product overcomes the shortcomings of monofilament-containing mats by providing a mat with a textile upper surface that has been thermally modified to obtain a scraping texture in the treated areas. This scraping texture is due to the shrinkage and/or melting of the mat fibers in the treated areas, which leads to areas of reoriented polymer (that is, the fibers become molten and reoriented into an unrecognizable form). Unlike other carving methods which employ potentially hazardous chemicals, the present process is environmentally friendly and uses only heated air streams to produce the desired results. Further, the treated areas form an aesthetically pleasing pattern on the textile surface.

### SUMMARY

Aspects of the present invention are defined in claims 1 and 6 below. The dependent claims are directed to optional and preferred features. The present mat is defined in claim 1 below and comprises *inter alia* (i) a textile upper surface that has been thermally modified to produce an aesthetically pleasing pattern and a harsh hand and (ii) a backing surface of a durable and flexible material. The patterned areas of the textile upper surface have an abrasive hand (due to the thermal modification of the yarns, such as by melting, shrinking, and/or fusing), making this mat ideal for scraping dirt from the footwear of the mat's users. The patterned mat is able to withstand industrial laundering without any adverse effects on the patterned areas or the backing.

### BRIEF DESCRIPTION OF THE DRAWINGS

FIGURE 1 is a schematic representation of the floor mat of the present invention, in which the textile upper surface has been treated to produce a plurality of patterned areas having thermally modified yarns;
FIGURE 2 is a. cross-sectional view of the mat of FIG. 1, as taken along line 2-2;
FIGURE 3 is a cross-sectional view of a mat similar to that of FIG. 1, in which the backing layer is comprised of rubber crumb;
FIGURE 4 is a an exploded view of yet another backing construction, as seen from the rear side of the flooring article;
FIGURE 5 is a flow-chart of an exemplary production process for the mats described herein;
FIGURE 6 is a schematic side elevation view of an apparatus for heated pressurized fluid stream treatment of a moving web of substrate material to thermally modify portions of the substrate material;
FIGURE 7 is an enlarged partial sectional elevation view of the fluid distributing manifold assembly of the apparatus of FIG. 6;
**FIGURE 8** is an enlarged broken-away sectional view of the fluid stream distributing manifold housing of the manifold assembly as illustrated in FIG. 7;
**FIGURE 9** is an enlarged broken-away sectional view of an end portion of the fluid stream distributing manifold housing;
**FIGURE 10** is a graph comparing percentage of shrinkage as a function of temperature for a number of representative fiber types; and
**FIGURE 11** is a schematic side elevational view of apparatus for laser beam treatment of a moving textile fabric to impart a surface pattern or change in the surface appearance thereof.

### DETAILED DESCRIPTION

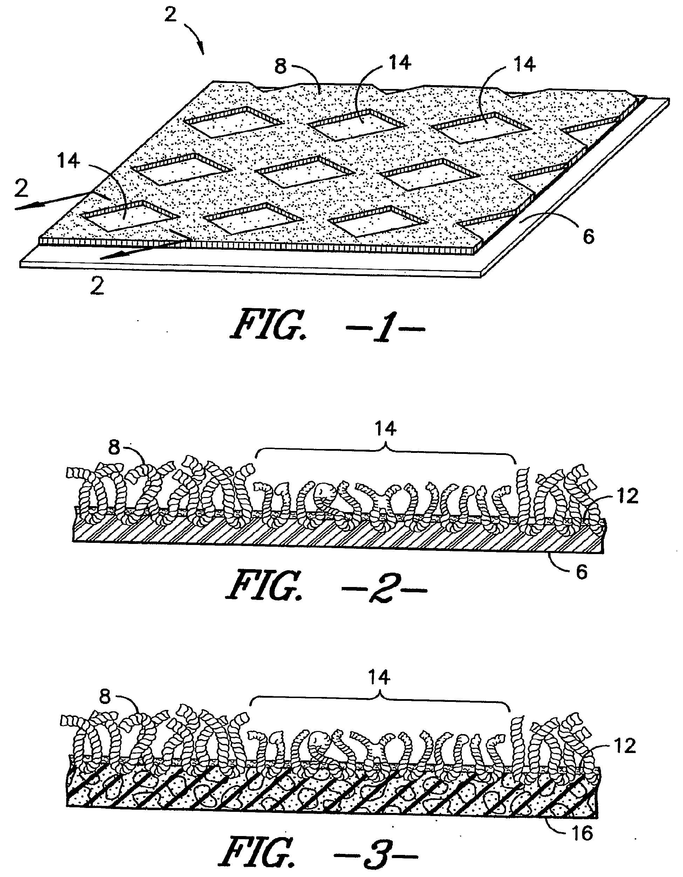

As shown in **FIG. 1****,** the present mat **2** has a textile upper surface **10** that has been thermally modified in a patternwise arrangement, such that the patterned areas **14** have an abrasive feel ideal for scraping dirt from footwear. Such abrasive feel, or harsh hand, is due to the thermal modification of the heat-treated yarns, which may result in fibers having a clubbed end or, in extreme cases, a ball of re-melted polymer on the end of a fiber stalk or fiber. The term "thermal modification", as used herein, is intended to encompass shrinkage (in which the filaments decrease in size longitudinally, but are still recognizable as separate filaments) and melting (in which the yarns are heated beyond their glass transition point, become molten, and, when cooled, produce a yarn bundle that is fused to itself or to an adjacent yarn). In extreme cases, for instance, when high temperatures are used, the yarns form a molten "puddle" that solidifies into a hardened mass. In both shrinkage and melting, the physical characteristics of the yarn are modified due to exposure to heat. Attached to textile upper surface **10** is a flexible and durable backing material (e.g., **6**). The various components and methods used in the production of such a mat are described below..

### Textile Upper Surface

Textile upper surface **10** is one of a woven fabric, a knit fabric, a nonwoven fabric, a flocked substrate, or a tufted fabric in the form of a loop pile, a multi-level loop pile, a cut pile, or a combination of loop and cut pile. As illustrated in **FIGS. 1, 2,** and **3****,** a cut pile substrate preferably is used as textile upper surface **10,** because of its appearance, softness, and dust control attributes, although other substrates may also be used.

It has been found that the patterning effects created by the thermal treatment that will be described herein are most apparent when textile upper surface **10** has a raised pile. Accordingly, textile upper surface **10** is preferably a tufted fabric, in which tufts of yarn **8** are secured in a tufting substrate **12** to create a pile. Tufting substrate **12** may be made of any construction or material known in the art, although a nonwoven polypropylene substrate coated with nylon is preferred. One important aspect of using a nylon-coated polypropylene nonwoven substrate is its dimensional stability, particularly during dyeing or printing (if desired), during the backing process, and during laundering. Alternately, a woven polypropylene tufting substrate, with either a nylon cap or a polypropylene cap, may also be used.

Yarns **8** used to create the textile upper surface may be made of any suitable material, including, polyamides (such as nylon 6 and nylon 6,6); polyesters (such as polyethylene terephthalate and polybutylene tererphthalate); polypropylene; acrylic; wool; and combinations thereof. Nylon is the preferred fiber type because of its durability, pile resistance, and colorfastness when dyed. A potentially preferred combination of yarns is a blend of nylon and wool, perhaps in a combination where 80% of the yarns are wool and 20% of the yarns are nylon.

Alternately, solution-dyed synthetic yarns may be used, which provide high degrees of colorfastness and lightfastness (that is, they resist fading due to laundering or exposure to sunlight). In another embodiment, for all yarn types, yarns **8** may be dyed after being incorporated into textile upper surface **10,** either before or after being thermally treated. When wool yarns are used, it is preferable to dye the textile upper surface after thermal treatment.

Preferably, in the case of synthetic yarns, yarns 8 are multi-filament, rather than spun, yarns. The yarns have a preferred denier size in the range of 600 denier to 1600 denier, and, more preferably, a denier between 1000 denier and 1400 denier. Multi-filament yarns are preferred, because it has been found that the patterns produced using these yarns are durable to laundering and to use (that is, they will neither wash out nor "walk-out" over time). Surprisingly, to the contrary, the patterned areas **14** in these mats **2** are actually enhanced, and become more pronounced, with repeated wash cycles, especially when the mats are dyed before being thermally patterned.

In one embodiment, yarns **8** of a single material and color are used to produce textile upper surface **10** (for example, solution-dyed nylon yarns of a single color). In this embodiment, when textile upper surface **10** is thermally treated to produce patterned areas **14,** yarns **8** in the patterned areas **14** are modified, causing a subtle color change between the treated and untreated areas due to the change in fiber morphology that results from the thermal treatment of the yarns. Such color change enhances the pattern that has been applied to textile upper surface **10.** It has also been found that an aesthetically pleasing product is produced by using yarns of the same fiber type but of different colors, which are twisted together before being tufted into the tufting substrate.

In an alternate embodiment, textile upper surface **10** is thermally treated before yarns 8 are dyed (that is, undyed yarns are used to produce textile upper surface **10**). In this instance, the thermal shrinkage of yarns **8** that occurs during treatment causes a change in the crystallinity of the yarns, such that there is a resulting dye uptake differential. Accordingly, when thermally treated textile upper surface 10 is dyed, there is a color difference between the patterned areas 14 and the remaining yarns 8, which further accentuates the pattern.

Yet another embodiment is described in commonly assigned US Patent 5,865,933 to Morin et al., to which the skilled reader may refer for details. In this approach, yarns 8 of two different materials and colors are used (for example, a first, higher melt fiber of a first color and a second, lower melt fiber of a second color), where the thermal treatment is of a sufficient temperature to melt the second fibers, while leaving the first fibers substantially unchanged. Thermal treatment of these different yam colors and materials produces a textile upper surface having a carved portion in registry with a color change. When patterned with a selective application of heat at a temperature that exceeds the melting point of the second fibers but is less than that of the first fibers, the second fibers melt away leaving the first fibers with the first color dominating. In the uncarved areas, the resulting color is a blend of the first color and the second color.

Polyester is a typical, but non-limiting, example of first, higher melt fibers, but nylon 6, nylon 6 - 6, rayon, and cellulose (such as cotton, acetate, and LYOSINE®) would suffice. There is also a higher melt polyethylene that could function as the first, higher melt fiber. As an example, polyester has a melting point of between 250 °F and 265 °F (between about 121 °C and 129 °C).

Typical, but non-limiting, examples of second, lower melt fibers include polypropylene and a lower melt polyethylene. However, if a rayon or cellulose fiber is utilized as the first, higher melt fiber, then polyester or nylon can be utilized as the second, lower melt fiber. As an example, polypropylene has a melting point of about 170 °F (about 77 °C).

The percentage of first, higher melt fibers to second, lower melt fibers is in a range of ten (10) to ninety (90) percent. However, a more practical range of the percentage of first, higher melt fibers to second, lower melt fibers is between thirty (30) and seventy (70) percent, and the preferred range of the percentage of first, higher melt fibers to second, lower melt fibers is between forty (40) and sixty (60) percent.

### Backing Layer

Preferably, the backing layer (indicated with reference numbers 6 or **16**) is made of any wash-durable, flexible material, including rubber, rubber crumb, polyvinyl chloride (PVC), latex, or other similar materials. Woven or nonwoven textile materials may also be used as backing layer **16,** as will be described herein, where such textile materials are secured to textile upper surface **10** by means of adhesive or fusing.

In a first embodiment, the backing layer is a solid sheet material **6** made of rubber or PVC (see **FIGS. 1** and **2**). When rubber is used, the backing layer **6** may be comprised of any standard type of rubber, such as acrylonitrile-butadiene (NBR) or styrene-butadiene (SBR), or carboxylated derivatives of such butadienes, EPDM, and the like (with or without the addition of a blowing agent), as examples. Such rubber sheet material **6** is preferably comprised of NBR. A single layer of dense rubber may be used, or a combination of dense rubber and foam rubber layers may be used as the backing layer **6.** The target thickness for such a backing layer **6,** either rubber or vinyl, is from about 0.020 inches (0.5 mm) to about 0.200 inches (5.0 mm), and preferably from about 0.040 inches (1.0 mm) to about 0.080 inches (2.0 mm).

A second embodiment useful as the backing of the present mat is an elastomer crumb backing described in GB Patent 2,389,526 to Brazier (illustrated in **FIG. 3** by reference number **16**). The elastomer is preferably rubber, and, more preferably, nitrile rubber. This backing material provides better performance, lower costs, and fewer environmental concerns than PVC. "Nitrile rubber" is a term used to describe a compounded rubber mixture of which the main polymeric content is an acrylonitrile butadiene copolymer. It may also contain fillers such as carbon black, a curing system, plasticizers and other ancillary components.

In this embodiment, backing layer **16** includes rubber crumbs and a binder, characterized in that the rubber backing includes voids between the rubber crumbs. The term "crumb" has the normal meaning in the rubber industry of any "broken down" rubber: thus, a crumb of rubber can encompass rubber pieces of any size in a range that includes powder, granules, and chips. The term "powder" refers to crumb that will pass through a 2 mm mesh or, said another way, crumb with a maximum dimension of 2 mm as the context requires. The term "granule" refers to crumb that will pass through a 6 mm mesh or crumb with a maximum dimension of 6 mm, as the context requires. "Granules" may include some powder but are generally larger than powder. The term "chips" means crumbs that are larger than granules.

The crumb size preferably may be within the range of about 0.8 mm to about 6 mm, with crumb sizes less than about 5 mm diameter being generally preferred. More specifically, crumb sizes within the range of about 2 mm to about 4 mm, and preferably sizes of about 3 mm or less, have been found to be particularly advantageous for use.

The choice of crumb size to be used, and the relative percentage of powder used, if any, depends somewhat upon the desired performance aspects of the mat and the desired manufacturing cost. Because use of small crumb (say, for example, powder less than about 1 mm) tends to require increased use of binder and thereby increased manufacturing cost, limiting use of crumb to small granules and large powder (e.g., crumb within the range of about 1 mm to about 4 mm, or, preferably, predominantly crumb within the range of about 2 mm to about 3 mm) may be preferred if minimizing manufacturing cost is important.

The use of powdered crumb increases the strength of the resulting backing and generates a smoother appearance, but increases the cost of production, both in the need for additional grinding and in the need for the use of additional binder. Accordingly, the amount of powdered crumb can be adjusted to suit the needs of the product; typically, including powder of at least 10% by weight has been used.

The binder, which is used to secure the rubber crumb into a cohesive and durable backing layer **16,** may be comprised of any of several different materials. For example, the binder may be a polyurethane MDI binder. Preferably, it is selected from the group consisting of 4,4-methylene di-p-phenylene isocyanate (MDI) polyurethane one- and two- component adhesives.

Advantageously, the binder is a solvent-free, one component (moisture curing) polyurethane adhesive. Such binder may be present at a level of from 4 to 12% of the weight of the crumb. Alternatively, the binder may be a hot melt binder and is desirably present at a level of from 3 to 10% of the weight of the crumb.

When powdered elastomer crumb is included in the backing **16** and the binder is a one-component polyurethane adhesive, the binder level preferably lies in the range 9 to 20% of the weight of the crumb, as may be determined by experimentation. The backing **16** may include powdered or liquid additives selected from the group consisting of antimicrobial additives, anti-flammability additives, pigments (such as iron oxide), and antistatic additives (such as carbon fibers). This provides added functionality to the mat **2.**

In making an acceptable-and sometimes superior-mat backing **16** using only rubber crumb and a binder, it is important to control the pressure used in the production process to allow voids to exist between the individual rubber crumbs of the backing. The presence of voids between the crumbs increases the flexibility of backing layer **16,** thereby compensating for the stiffening effect of the binder and providing a deformability that is comparable to that of a conventional rubber backing made of a sheet material (e.g., **6**).

Advantageously, the elastomer backing has a bulk density in the range 45 to 70%, preferably 55 to 70%, of the elastomer from which the crumbs are made. Advantageously, the crumb backing layer has a density of less than 1g/cm³. The backing preferably has a density in the range 0.5 to 0.9g/cm³, more preferably 0.7 to 0.9g/cm³. The crumb rubber mat backing preferably has a thickness of a least 1 mm.

The tear strength of the backing is adequate for most mat backings, even in unsupported border regions of the mat. The backing is also extremely stable when the crumb-backed mat is placed on top of carpet, probably because the pile of the carpet is gripped by the numerous small gaps between the crumbs of the backing. Crumb-backed mats are also relatively light and have good fire resistance. Advantageously, the backing exhibits tear resistance strength of at least 0.8N/mm². Preferably, the tear resistance strength is about 1.5N/mm² or higher.

Advantageously, whether a sheet-like backing 6 or a crumb backing layer 16 is used, a border extending beyond the periphery of the textile surface 10 is provided on at least two opposite edges of mat 2. The borders may be provided around the entire periphery of mat 2.

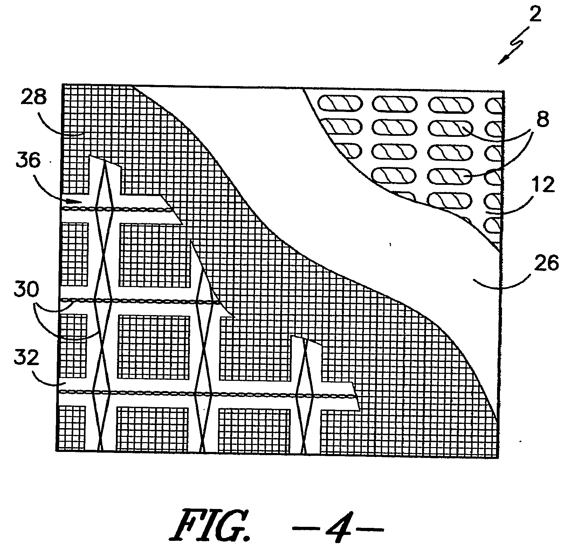

In yet another embodiment, described in US Patent Application Publication No. 2004-0043184 to Kobayashi et al., to which the skilled reader may refer for details, an adhesive layer is positioned between the textile upper surface and a textile backing layer, which is then secured with a coated mesh fabric. These layers are secured to one another by subjecting the layers to heat and pressure (for example, in a vulcanization chamber), which cause the adhesive layer and the coated mesh fabric to melt and fuse to adjacent layers. An exploded view of this backing system is shown in FIG. 4. The resulting composite has a backing that is soft, skid-resistant, and durable. Specifics of the manufacturing process for such a mat are provided below.

### Mat Creation

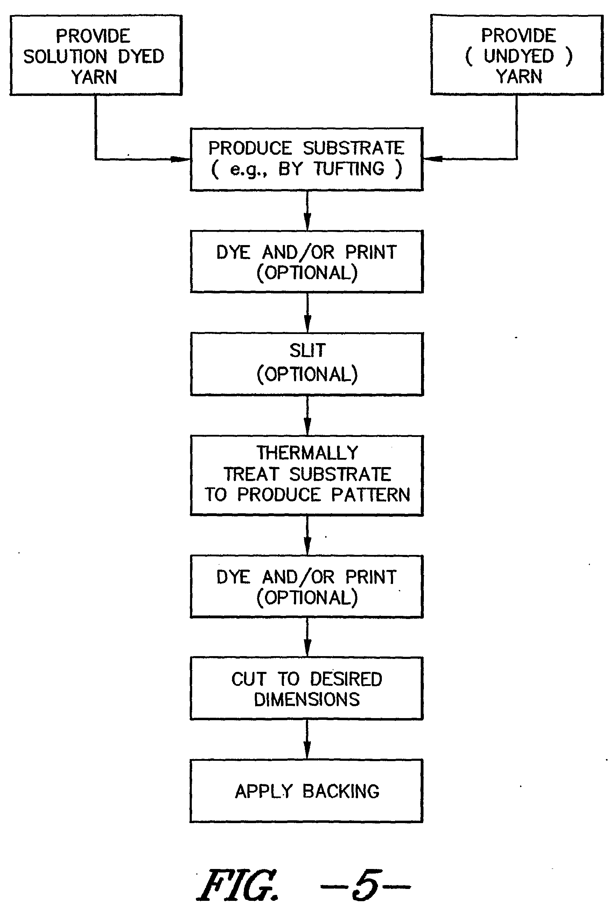

**FIG. 5** provides an outline of an exemplary process by which the present mats may be produced. The starting material for such mats may be a solution-dyed yarn (as indicated on the left side of the flowchart) or a natural, undyed yarn (as indicated on the right side of the flowchart). The yarns are incorporated into a substrate, for example, by weaving, knitting, tufting, air laying, needle-punching, spun-bonding, hydro-entanglement, or the like. In the case of a tufted substrate, the pile may be loop pile or cut pile.

Once the textile upper surface **10** has been produced, the textile may optionally be dyed, using such techniques as known in the art, such as jet dyeing, vat dyeing, continuous dyeing, pad dyeing, and the like. Alternately, or in addition to dyeing, textile upper surface **10** may optionally be printed, for example, using a jet dyeing apparatus and control systems, such as those described in US Patent 4,084,615 to Klein et al.; US Patent 4,116,626 to Varner; US Patent 4,984,169 to Johnson, Jr.; US Patent 5,136,520 to Cox; US Patent 5,142,481 to Cox; US Patent No. 5,208,592 to Johnson, Jr.; US Patent Application Publication 2005-0106355 to Kohlman et al.; and US Patent Application Publication No. 2005-0206935 to Cox et at.

Other acceptable, but perhaps less preferred printing methods, include the Chromojet® printing apparatus by Zimmer, any screen printing apparatus, and any other printing apparatus, which are capable of dyeing or printing textile substrates. Textile upper surface **10** may be dyed a solid color or may be printed in a pattern that is complementary or identical to the thermal treatment pattern. Of course, when solution dyed yarns are used, no further printing or dyeing may be necessary. In fact, various colors of solution dyed yarns may be used in a graphics tufting process to produce a mat **2** with a textile upper surface **10** having multiple yarn colors.

Often, the width of textile upper surface **10,** when in roll form, is too large for processing on the thermal treatment apparatus. In this instance, it may be desirable to slit textile upper surface **10** to accommodate the equipment used in further processing or to facilitate handling thereof. Such step is not required, unless dictated by processing specifications.

The next step in the production of mat **2** is the thermal treatment, or modification, of textile upper surface **10.** This process, and the equipment used therein, will be described in detail below. In summary, pressurized streams of hot fluid (e.g., air) are directed toward a textile substrate to carve the substrate in a patterned arrangement. As has been mentioned previously, the carving may be done in register with printed images on the substrate or may be done in a pattern complementary to such printing. This "carving" process causes the yarns in to which the heated air has been applied to be thermally modified, causing the yarns to become stiff and abrasive due to the localized melting and fusion of yarn fibers and/or the repositioning of individual yarn fibers when molten (such that the individual fiber ends become clubbed, that the fiber ends have droplets or balls of polymer attached thereto, or that the fiber structure becomes reoriented to the point of being unrecognizable).

If textile upper surface **10** was not dyed or printed before being subjected to thermal treatment, such dyeing or printing may occur after thermal treatment, as shown in the flowchart. When the textile upper surface **10** is patterned, the yarns **8** in the patterned areas **14** undergo a modification of their surface crystallinity. As a result, a differential dye uptake is observed between the patterned areas **14** and the untreated areas of textile upper surface **10,** as the patterned areas **14** absorb more dye. This dye differential further emphasizes the pattern that has been applied to textile upper surface **10.**

Once textile upper surface **10** has been colored (either by dyeing, printing, or the use of solution-dyed yarns) and carved (by the thermal treatment process), textile upper surface **10** is cut to desired dimensions for assembly into a finished product. Textile upper surface **10** may be cut using any techniques known in the industry, including die cutting, hot knife cutting, laser cutting, ultrasonic cutting, and the like.

At this point, backing layer **6** or **16** is applied to the pre-cut textile for production of mat **2.** Several different backing systems may be used, as have been mentioned previously. The following paragraphs will provide a description of each backing system: (a) a backing comprised of a flexible sheet material; (b) a backing comprised of rubber crumb; and (c) a backing comprised of a textile backing material, which is secured to the textile upper surface with an adhesive.

When a sheet material is used, backing layer **6** is typically applied by placing textile upper surface **10** over a correspondingly shaped piece of rubber. The stacked mat components are then conveyed into a vulcanization oven, or chamber, over a heated platen. An inflatable diaphragm produces pressure to forcibly connect textile upper surface **10** to backing layer **6,** which is slightly molten from being exposed to the heat from the platen. Typical pressures used in such a device range from 20 p.s.i. to 60 p.s.i. (1,4 - 4,2 bar), with temperatures being in the range of about 275 °F to about 400 °F (about 135 °C to about 204 °C).

When backing layer **16** (made of rubber crumb) is used, a slightly different process occurs. First, a mixture of rubber crumb, binder, and any other desired additives is made up and spread evenly onto a conveyor belt, forming a loose crumb layer having a thickness, width, and length that are slightly greater than the required dimensions for backing layer **16.** The binder may, for example, be a hot melt powder, in which case the amount of binder typically varies between 3% and 10% by weight, depending on the size of the crumbs and the amount and type of any optional additives.

The die-cut textile upper surface **10,** preferably having a length and width that is slightly less than the equivalent dimensions of the loose crumb rubber layer, is placed on top of the loose crumb layer. Preferably, in this instance, the textile upper surface **10** has been thermally modified in a patternwise arrangement before being combined into a mat **2.** The mat components are then covered with a release sheet of PTFE-coated woven glass fabric to prevent the rubber backing sheet sticking to the diaphragm.

The press is heated to a temperature of about 257 °F (about 125 °C). The conveyer belt is advanced to position the mat components between the platen and the diaphragm, and the diaphragm is then inflated, for example, to a pressure of about 4 p.s.i. (0,28 bar) , pressing the mat components against the heated platen, typically for a cycle time of 10 minutes. The heat from the platen activates the binder, thereby binding the rubber crumbs together and forming the backing layer. At the same time, the pressure of the diaphragm slightly compresses the backing layer to ensure a good bond between the granules, and presses textile upper surface **10** against the backing layer, allowing the binder to bond the two layers together.

After completion of the pressing process, the diaphragm is deflated and the rubber-backed mat **2** is removed from the press and allowed to cool. The release sheet is then removed and, if necessary, the edges of rubber backing layer **16** are trimmed, for example, using any suitable knife or other cutting means.

The flexibility and strength of the backing **16** can be controlled by adjusting the pressure applied to the backing in the press. By increasing the pressure, the tensile strength of the backing **16** can be increased. By reducing the pressure, the flexibility of the backing **16** can be increased. The desired performance characteristics of the backing **16** can thus be achieved by careful control of the diaphragm pressure.

When using the third potential backing system described herein, as shown in **FIG. 4****,** which comprises a textile substrate **28** sandwiched between an adhesive layer **26** and a coated, fusible mesh **36,** a soft, skid-resistant backing is produced. In this instance, adhesive layer **26** is used to secure the yarns **8** in textile upper surface **10.** Adhesive layer **26** is typically a solid material that softens when subjected to heat and pressure. This softening creates cohesion between textile upper surface **10** and the textile backing layers.

Adhesive layer **26** may be comprised of any number of materials, including, but not limited to, natural rubbers, synthetic polyisoprene rubbers, styrene-butadiene rubbers, acrylonitrile-butadiene-sytrene rubbers, ethylene propylene rubbers, urethanes, polypropylene, polyethylene, nylon, polyester, acrylonitrile-butadiene-styrene, polyvinyl chloride, thermoplastic elastomers, thermoset plastics, lowmelt thin films, or any combinations thereof. The use of thermoplastic elastomer is preferred because of its adhesion properties and its ease of use in manufacturing.

The backing textile material **28** is useful in providing a soft backing for mat **2** and in providing dimensional stability to mat **2.** The backing textile material **28** also decreases the likelihood of the adhesive layer **26** cracking or breaking with use of mat **2.** In addition, the backing textile material **28** provides a uniform appearance on the reverse side of the mat **2.** Cotton, polyester, polypropylene, nylon, acrylic, or any combinations thereof may be used to create the backing textile material **28,** which may be a woven, nonwoven, or knit material. The use of a cotton or polyester woven material is preferred for softness.

The final component of the third backing system is a mesh fabric **36** that has a fusible coating **32** surrounding the mesh **30.** The coated mesh fabric **36** adds dimensional stability to mat **2** and prevents mat **2** from sliding during use. The coated mesh fabric **36** may comprise any woven, nonwoven, or knit material, having a substantially open configuration; woven fabrics are preferred for the uniformity of the mesh. The openings in the mesh fabric **30** should preferably be from about 0.125 inches to about 1.5 inches (about 0.3175 cm to about 3.81 cm), and more preferably should be about 0.5 inches (about 1.27 cm). The fabric **30** itself may be comprised of cotton, polyester, polypropylene, nylon, acrylic, or any combination thereof, although cotton or polyester is more preferred. When using cotton or polyester, it may be desirable to pre-shrink the fabric **30** before coating with a fusible material **32.**

The fabric **30** is coated with, by way of example, natural rubbers, synthetic polyisoprene rubbers, styrene-butadiene rubbers, acrylonitrile-butadiene-sytrene rubbers, ethylene propylene rubbers, urethanes, polypropylene, polyethylene, nylon, polyester, acrylonitrile-butadiene-styrene, polyvinyl chloride, thermoplastic elastomers, thermoset plastics, or any combinations thereof. The preferred mesh fabric **30** is a woven fabric with a latex coating, in which the fabric component is made from cotton or polyester. It has been found that production of mat **2** is most successful when the melting points of the coating **32** and the adhesive layer **26** are comparable.

Mat **2** is produced by placing the component pieces on top of one another as in a continuous vulcanization press or shuttle vulcanization press. The process may be run continuously or in batch mode. The layers are positioned as follows: coated mesh fabric **36,** backing textile material **28,** adhesive layer **26,** and textile upper surface **10,** which preferably comprises tufting substrate **12** and yarns **8** that have been subjected to the thermal treatment process described below. It should be noted that the coated mesh fabric **36** should be positioned toward the heating platen of the vulcanization chamber (that is, if the heating platen is at the top of the chamber, then the order described above should be reversed).

The mat components are then subjected to heat and pressure, as would be found in a vulcanization chamber. The heat and pressure of the vulcanization environment cause the adhesive layer **26** and the coating **32** of mesh fabric **30** to melt and fuse the component layers together. Temperatures in the range of about 356 °F to about 428 °F (about 180 °C to about 220 °C) are preferred, while temperatures in the range of about 383 °F to about 392 °F (about 195 °C to about 200 °C) are more preferred. Pressures ranging from about 15 pounds per square inch (gauge) (p.s.i.g.) (1 bar) to about 50 p.s.i.g. (3,5 bar) are preferred, while a pressure of about 30 p.s.i.g. (2,1 bar) is more preferred.

Mat **2** thereby has a backing that is soft, skid-resistant, and durable. The coating **32** around the mesh fabric **30,** when fused, becomes flattened due to the pressure of the inflatable diaphragm, resulting in a backing that lies flat when in use. The softness of backing textile fabric **28** and the fused coating **32** prevents damage to flooring surfaces on which mat **2** is placed, while simultaneously preventing mat **2** from sliding during use.

Although not strictly reflected by the steps in the flowchart of **FIG. 5****,** PVC backing systems may also be used. In this instance, PVC backings are applied in liquid form to a belt having dams on opposing sides and a doctor blade located above the belt. The doctor blade is moved over the molten polymer to create a backing layer of uniform thickness. While the PVC is still in molten form, a roll of the textile upper surface **10** is superimposed over the PVC layer. The components are conveyed between a pair of nip rolls with minimal pressure to ensure that textile upper surface **10** is laid out evenly and is in uniform contact with the PVC layer. The assembled components are then conveyed through an oven at temperatures of between about 250 °F (about 121 °C) and about 300 °F (about 149 °C) for a distance of between 30 (about 9.1 meters) and 50 feet (about 15.2 meters) to cure the PVC and secure it to the textile layer. The cured PVC and textile layer are then cut to desired dimensions.

### Thermal Treatment

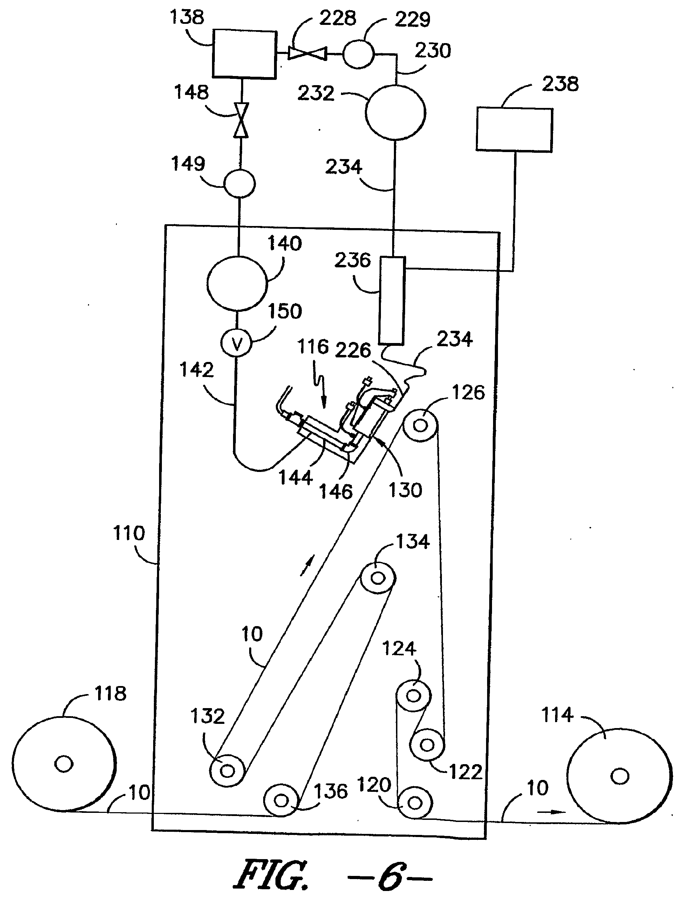

Referring now to the thermal treatment of textile upper surface **10,** which is responsible for providing the desired scraping functionality to mat **2,** **FIG. 6** shows, diagrammatically, an overall side elevational view of an apparatus for heated, pressurized gas stream treatment of a textile upper surface **10** for carve surface **10** in a patterned arrangement. As seen, the apparatus includes a main support frame including end frame support members, one of which **110** is illustrated in **FIG. 6****.** Suitably rotatably mounted on the end support members of the frame are a plurality of textile fabric guide rolls which direct an indefinite length of textile upper surface **10,** from a fabric supply roll **118,** past a pressurized, heated gas treating unit, generally indicated at **116.** After treatment, the textile upper surface **10** is collected in a continuous manner on a take-up roll **114.**

As shown, textile upper surface **10** from supply roll **118** passes over an idler roll **136** and is fed by a pair of driven rolls **132, 134** to a main driven textile fabric support roll **126** with the textile upper surface **10** between drive roll **132** and textile fabric support roll **126** being overfed and slack with a negative tension in a range of between two and twenty percent, with a preferred range of between two and twelve percent. The amount of negative tension, or overfeed, depends on the construction, fiber type, and other factors related to the textile fabric **10.** The overfeed, or negative tension, must stop before the point at which puckering of the textile upper surface **10** occurs. The surface of textile upper surface **10** passes closely adjacent to the heated fluid discharge outlet of an elongate fluid distributing manifold assembly **130** of treating unit **116.** The treated textile fabric **4** thereafter passes over a series of driven guide rolls **122, 124** and an idler roll **120** to a take-up roll **114** for collection.

As illustrated in **FIG. 6****,** fluid treating unit **116** includes a source of compressed gas, such as an air compressor **138,** which supplies pressurized air to an elongate air header pipe **140.** Header pipe **140** communicates by a series of air lines **142** spaced uniformly along its length with a bank of individual electrical heaters indicated generally at **144.** The heaters **144** are arranged in parallel along the length of heated fluid distributing manifold assembly **130** and supply heated pressurized air thereto through short, individual air supply lines, indicated at **146,** which communicate with assembly **130** uniformly along its full length. Air supplied to the heated fluid distributing manifold assembly **130** is controlled by a master control valve **148,** pressure regulator valve **149,** and individual precision control valves, such as needle valves **150,** located in each heater air supply line **142.** The heaters **144** are controlled in suitable manner, as by temperature sensing means located in the outlet lines **146** of each heater, with regulation of air flow and electrical power to each of the heaters to maintain the heated fluid at a uniform temperature and pressure as it passes into the manifold assembly along its full length.

Typically, for patterning textile fabrics, such as pile fabrics containing thermoplastic yarns, the heaters are employed to heat air exiting the heaters and entering the manifold assembly to a uniform temperature. The preferred operating temperature for any given textile fabric depends upon: the components of the textile fabric, the desired amount of carving effect, the speed of transport of the textile fabric, the pressure of the heated pressurized gas, the tension of the textile fabric, the proximity of the textile fabric to the treating manifold, and others. Generally, the temperature can range between about 300 °F to about 1,200 °F (about 149 °C to about 649 °C) with a more practical operating range of about 375 °F to about 1,000 °F (about 190 °C to about 538 °C) and a preferred optimal range of 450 °F to 850 °F (about 232 °C to about 454 °C). When two different fiber types (such as polyester and polypropylene) are used, this preferred optimal range will maximize the contrast between the color of the first, higher melting point fibers (polyester) and the blend of higher and lower melting point fibers (polyester and polypropylene).

The heated fluid distributing manifold assembly **130** is disposed across the full width of the path of movement of the textile fabric and closely adjacent the surface thereof to be treated. Although the length of the manifold assembly **130** may vary, typically in the treatment of textile fabric materials, the length of the manifold assembly may be 76 inches (193 cm) or more to accommodate textile fabrics of up to about 72 inches (183 cm) in width.

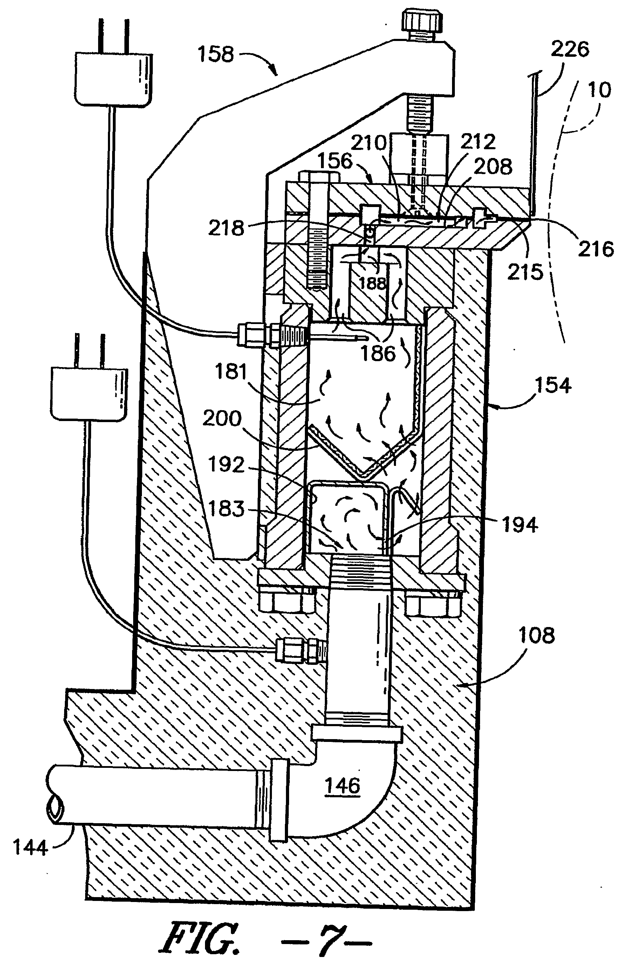

Details of the heated fluid distributing manifold assembly **130** may be best described by reference to **FIGS. 7****,** **8,** and **9****.** As seen in **FIG. 7****,** which is a partial sectional elevation view through the assembly, there is a first large elongate manifold housing **154** and a second smaller elongate manifold housing **156** secured in fluid tight relationship therewith by a plurality of spaced clamping means, one of which is generally indicated at **158.** The manifold housings **154, 156** extend across the full width of the textile upper surface **10** adjacent its path of movement.

As best seen in **FIG. 7****,** first elongate manifold housing **154** is of generally rectangular cross-sectional shape, and includes a first elongate gas receiving compartment **181,** the ends of which are sealed by end wall plates suitably bolted thereto. Communicating with bottom wall plate through fluid inlet openings, one of which, **183,** is shown in **FIG. 7****,** and spaced approximately uniformly therealong are the air supply lines **146** from each of the electrical heaters **144.**

The manifold housings **154, 156** are constructed and arranged so that the flow path of gas through the first housing **154** is generally at a right angle to the discharge axes of the gas stream outlets of the second manifold housing **156.**

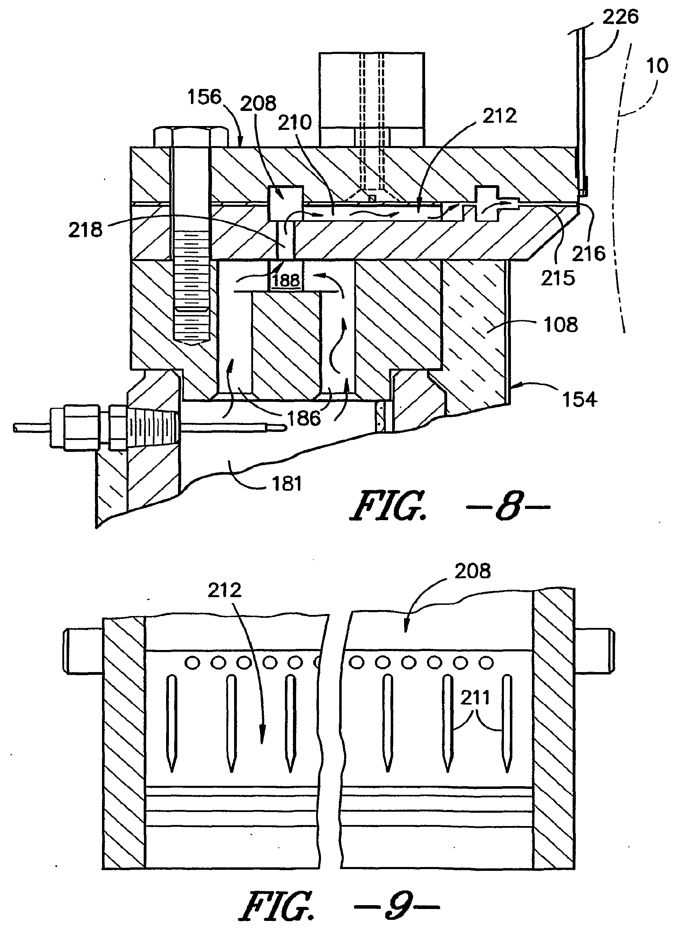

As best seen in **FIGS. 7** and **8****,** manifold housing **154** is provided with a plurality of gas flow passageways **186** which are disposed in uniformly spaced relation along the plate in two rows to connect the first gas receiving compartment **181** with a central elongate channel **188.**

Baffle plate **192** serves to define a gas receiving chamber in the compartment **181** having side openings or slots **194** to direct the incoming heated air from the bank of heaters in a generally reversing path of flow through compartment **181.** Disposed above channel-shaped baffle plate **192** is compartment **181** between the fluid inlet openings **183** and fluid outlet passageways **186** is an elongate filter member **200** which is a generally J-shaped plate with a filter screen disposed thereabout.

As seen in **FIGS. 7****,** **8,** and **9****,** a second smaller manifold housing **156** comprises first and second opposed elongate wall members, each of which has an elongate recess or channel **208** therein. Wall members are disposed in spaced, coextensive parallel relation with their recesses **208** in facing relation to form upper and lower wall portions of a second gas receiving compartment **210,** in the second manifold housing **156.** The gas then passes through a third gas receiving compartment **212** in the lower wall member of manifold housing **156** which is defined by small elongate islands **211** approximately uniformly spaced along the length of the member, as shown in **FIG. 9****.**

A continuous slit directs heated pressurized air from the third gas receiving compartment **212** in a continuous sheet across the width of the fabric at a substantially right angle onto the surface of the moving textile fabric **10.** Typically, in the treatment of textile fabrics such as pile fabrics containing thermoplastic fiber components, the continuous slit **215** of manifold **156** may be about 0.015 to about 0.030 of an inch (about 0.381 to about 0.762 mm) in thickness. For precise control of the heated air streams striking the textile fabric **10,** the continuous slit is preferably maintained between about 0.070 to about 0.080 of an inch (about 1.778 mm to about 2.032 mm) from the textile fabric surface being treated. However, this distance from the face of the textile fabric can be as much as 0.100 of an inch (about 2.54 mm) and still produce good pattern definition. The deflecting air tubes **226** are spaced twenty (20) to the inch over the seventy-two (72) inch (1828 mm) air distributing manifold, although the apparatus has been constructed as coarse as ten (10) (25,4 mm) to the inch and as fine as forty-four (44) (112 mm) to the inch.

Second manifold housing **156** is provided with a plurality of spaced gas inlet openings **218** (**FIGS. 7** and **8**) which communicate with the elongate channel **188** of the first manifold housing **154** along its length to receive pressurized, heated air from the first manifold housing **154** into the second gas receiving compartment **210.**

The continuous slit **215** of the second manifold housing **156** which directs a stream of air into the surface of textile upper surface **10** is provided with tubes **226** which communicate at a right angle to the discharge axis of continuous slit **215** to introduce pressurized cool air, i.e., air having a temperature substantially below that of the heated air in third gas receiving compartment **212,** at the heated gas discharge outlet **216** to deflect selectively the flow of heated air through the continuous slit **215** in accordance with pattern control information. Air passing through the tubes **226** may be cooled by a water jacket which is provided with cooling water from a suitable source, not shown, although such cooling is not required.

As seen in **FIG. 6****,** pressurized unheated air is supplied to each of the tubes **226** from compressor **138** by way of a master control valve **228,** pressure regulator valve **229,** air line **230,** and unheated air header pipe **232** which is connected by a plurality of individual air supply lines **234** to the individual tubes **226.** Each of the individual cool air supply lines **234** is provided with an individual control valve located in a valve box **236.** These individual control valves are operated to open or close in response to signals from a pattern control device, such as a computer **238,** to deflect the flow of hot air through continuous slit **215** during movement of the textile upper surface **10** and thereby produce a desired pattern in the textile upper surface **10.** Detailed patterning information for individual patterns may be stored and accessed by means of any known data storage medium suitable for use with electronic computers, such as magnetic tape, EPROMs, etc. The ability to readily change patterns provides enormous design capabilities while minimizing manufacturing costs and change-over time.

Each cool air fluid tube **226** is positioned at approximately a right angle to the plane defined by slit **215** to deflect heated pressurized air away from the surface of the moving textile upper surface **10 (****FIG. 7****)** as the textile fabric approaches continuous slit **215.** This deflection is generally at about a forty-five (45) degree angle from the path defined by continuous slit **215,** and serves to direct the deflected heated air toward the oncoming textile fabric **10.** Thus, a strong blast of mixed hot and cold air strikes the surface of the textile fabric prior to its being subjected to the action of the heated air issuing from continuous slit **215.**

This configuration of tubes **226** provides sufficient volume of air in combination with that from the continuous slit **215** to preheat the textile upper surface **10** to a temperature preferably short of permanent thermal modification.

It should be noted that, due to the insulation **108** generally surrounding manifold **154,** preheating is not believed to be the result of heat radiation from the manifold, but is rather the result of the exposure of textile upper surface **10** to the heated air issuing from continuous slit **215,** as that air is diverted by the relatively cool air issuing from tubes **226.** The heated air used for this purpose is air that has been diverted, in accordance with patterning instructions, after issuing from continuous slit **215,** i.e., this air would be diverted whether or not preheating was desired.

Therefore, preheating of the textile fabric is achieved as an integral part of, and is inseparable from, the patterning process, and requires no additional or separate heated air source. By so doing, not only is a separate preheating step and its attendant complexity unnecessary, but it is believed a separate preheating step would be incapable of imparting heat of sufficient intensity and directivity to maintain the textile upper surface **10** at an effective preheated temperature at the instant the heated patterning air issuing from continuous slit **215** contacts the textile fabric, as shown in **FIG. 9****.**

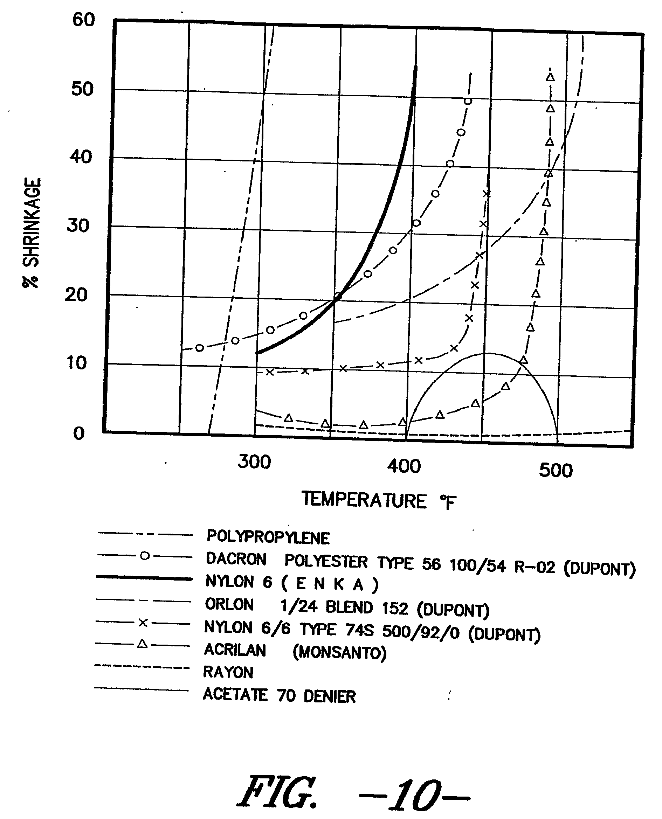

This preheating may cause additional thermal modification during the patterning step. As can be seen in connection with **FIG. 10****,** the amount of shrinkage and/or melting is a function of the type of fiber involved and the temperature to which it is subjected. The temperature of the hot air is adjusted to accommodate a particular fiber so that the amount of shrinkage and/or melting can be controlled regardless of the fabric. The air pressure of the heated gas can range between 0.5 to 10 pounds per square inch (0,03 - 0,69 bar) with a more practical operating range of **1** to **5** pounds per square inch (0,069 - 0,34 bar) and a preferred optimal range of **1** to **3** pounds per square inch (0,069 - 0,21 bar)

The air pressure of the cooler, blocking gas can range between 2 to 18 pounds per square inch (0,14 - 1,24 bar) with a more practical operating range of 9 to 18 pounds per square inch (0,62 - 1,24 bar) and a preferred optimal range of 10 to 12 pounds per square inch (0,69 - 0,83 bar). The speed of transport of the moving textile web can range between 1 to 25 yards per minute (about 0.9 to about 23 meters per minute) with a more practical operating range of 3 to 18 yards per minute (about 2.7 to about 16 meters per minute) and a preferred optimal range of 6 to 10 yards per minute (about 5.5 to about 9.1 meters per minute). For tufted substrates, slower operating ranges may be used to achieve the desired level of thermal modification, with preferred speeds of between 1 and 5 yards per minute (about 0.9 to about 2.7 meters per minute).

Additional information relating to the operation of such a pressurized, heated gas apparatus, including more detailed description of patterning and control functions, can be found in commonly assigned US Patent 4,364,156 to Greenway et al.; US Patent 4,393,562 to Stokes; US Patent 4,418,451 to Crenshaw; US Patent 5,035,031 to Elliott; and US Patent 5,148,583 to Greenway.

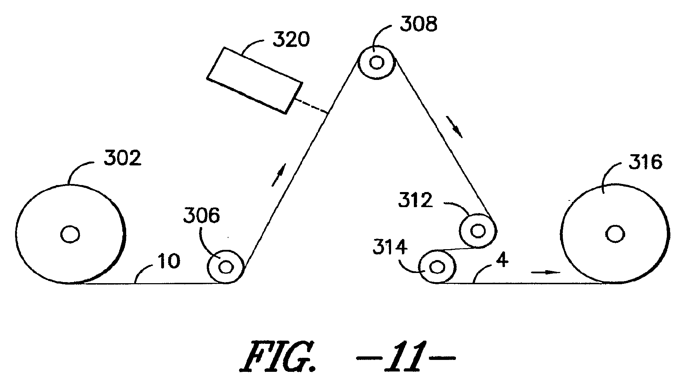

In the alternative, another non-preferred means of carving textile fabric is to subject textile fabric to the heat of a laser. Referring now to FIG. 11, which shows, diagrammatically, an overall side elevational view of apparatus for laser treatment of a textile upper surface 10 to impart lateral yarn displacement. There is a plurality of textile fabric guide rolls that direct an indefinite length of textile upper surface 10, from a fabric supply roll 302, past a laser unit, which is indicated by numeral 320. After treatment, the treated textile fabric 4 is collected in a continuous manner on a take-up roll 316. As shown, textile upper surface 10 from supply roll 302 passes over an idler roll 306 to a main driven textile fabric support roll 308. The surface of the textile upper surface 10 is hit by the laser beam from laser unit 320 between idler roll 306 and driven treated, textile fabric 4 thereafter passes over a series of driven guide rolls 312, 314 and to take-up roll 316 for collection.

Laser unit **320** is preferable a 10.6 micron wavelength, eighty watt, carbon dioxide laser, although any of a wide variety of lasers will suffice. One typical laser of this type is manufactured by Laser Machining, Inc. that is located at 500 Laser Drive, MS 628, Industrial Park, Somerset, Wisconsin. Although not specifically limited thereto, the preferred range of moving the textile upper surface **10** is a speed of one hundred to two hundred inches per minute.

In another non-preferred means of carving textile fabric, the textile upper surface **10** is subjected to a heated embossed roll, which presses a pattern down onto the pile surface. Other non-preferred methods of selectively applying heat for carving include an infrared heater tube, microwave, and so forth, including all means of selectively applying heat by means of either convection or radiation.

### Resulting Mat

Mat **2**-which is made with a thermally treated textile upper surface **10** and a durable, flexible backing layer **6** (or, alternately, **16**)-provides an aesthetically pleasing appearance, due to the pattern and/or printing on the textile upper surface. Moreover, the users thereof benefit from the abrasive quality of the patterned areas **14,** which is due to the shrinkage and/or melting of the thermally treated yarns **8.** Such a combination of appearance and functionality has heretofore been unattainable in a floor covering article. For this reason, the present mat represents an advancement over the prior art.

## Claims

1. A patterned floor mat (2), said mat (2) comprising:
(a) a textile upper surface (10) having a plurality of patterned areas (14), said patterned areas comprising yarns (8) that have been thermally modified; and
(b) a backing layer (6, 16, 28) made of a flexible, durable material,
wherein said textile upper surface (10) and said backing layer (6, 16, 28) are bonded together,
**characterized in that** said backing layer (6, 16, 28) is a sheet material selected from the group consisting of rubber, polyvinyl chloride, and rubber crumb that is adhered to said textile upper surface by a binder,
and **in that**, due to the thermal modification, at least a portion of said yarns (8) contain fibers that have a ball of remelted polymer on the end of the fibers.

2. The patterned floor mat of Claim 1, wherein the textile upper surface (10) comprises at least one of wool yarns, multi-filament synthetic yarns that are preferably solution dyed yarns, and a blend of synthetic yarns and wool yarns.

3. The patterned floor mat of Claim 1 or 2, wherein said textile upper surface (10) has been dyed.

4. The patterned floor mat of any of Claims 1 to 3, wherein said patterned floor mat (2) is launderable.

5. The patterned floor mat of any of Claims 1 to 4, wherein said textile upper surface (10) has a construction selected from the group consisting of a woven fabric, a knit fabric, a nonwoven fabric, a flocked substrate, a loop pile, a multi-level loop pile, a cut pile, and a combination of loop and cut pile.

6. A process for creating a launderable floor mat having a plurality of abrasive patterned areas, said process comprising:
(a) providing a textile substrate comprising a plurality of yarns;
(b) selectively applying heated streams of air to a portion of said yarns of said substrate to thermally modify said yarns in a patternwise arrangement, wherein the thermal modification includes shrinking and melting said yarns such that a ball of remelted polymer is formed on the ends of the yarns;
(c) cutting said patterned textile substrate into desired dimensions; and
(d) applying a backing layer to said patterned textile substrate, wherein said backing layer is a sheet material selected from the group consisting of rubber, polyvinyl chloride, and rubber crumb that is adhered to said textile upper surface by a binder.

7. The process of Claim 6, wherein said textile substrate has a construction selected from the group consisting of a woven fabric, a knit fabric, a nonwoven fabric, a flocked substrate, a loop pile, a multi-level loop pile, a cut pile, and a combination of loop and cut pile.

8. The process of Claim 6 or 7, wherein said yarns are at least one of multi-filament synthetic yarns that are preferably solution dyed yarns, and wool yarns.

9. The process of any of Claims 6 to 8, wherein said streams of air are heated to temperatures between about 190°C and 538°C (about 375 °F and 1,000 °F).

10. The process of any of Claims 6 to 8, wherein said streams of air are heated to temperatures between about 232°C and 454°C (about 450 °F and 850 °F).

11. The process of any of Claims 6 to 10, wherein said textile substrate is at least one of dyed or printed before step (b), and dyed or printed after step (b).

12. The process of any of Claims 6 to 11, wherein said backing layer is applied in a vulcanization chamber under heat and pressure.

## Patentansprüche

1. Gemusterte Bodenmatte (2), wobei die Matte (2) aufweist:
(a) eine obere Textiloberfläche (10) mit einer Vielzahl an gemusterten Bereichen (14), wobei die gemusterten Bereiche Garne (8) aufweisen, die thermisch modifiziert worden sind; und
(b) eine Stützschicht (6, 16, 28), die aus einem flexiblen, langlebigen Material hergestellt ist,
wobei die obere Textiloberfläche (10) und die Stützschicht (6, 16, 28) miteinander verbunden sind,
**dadurch gekennzeichnet, dass** die Stützschicht (6, 16, 28) ein Bogenmaterial ist, das aus der Gruppe ausgewählt ist, die aus Gummi, Polyvinylchlorid und Gummibruch besteht, das an die obere Textiloberfläche durch ein Bindemittel angehaftet ist,
und dadurch, dass aufgrund der thermischen Modifikation zumindest ein Abschnitt der Garne (8) Fasern enthält, die einen Ball aus wiederaufgeschmolzenem Polymer an dem Ende der Fasern aufweisen.

2. Gemusterte Bodenmatte nach Anspruch 1, wobei die obere Textiloberfläche (10) zumindest eines von Wollgarnen, synthetischen Multifilament-Garnen, die vorzugsweise lösungsgefärbte Garne sind, und einer Mischung aus synthetischen Garnen und Wollgarnen aufweist.

3. Gemusterte Bodenmatte nach Anspruch 1 oder 2, wobei die obere Textiloberfläche (10) gefärbt worden ist.

4. Gemusterte Bodenmatte nach einem der Ansprüche 1 bis 3, wobei die gemusterte Bodenmatte (2) waschbar ist.

5. Gemusterte Bodenmatte nach einem der Ansprüche 1 bis 4, wobei die obere Textiloberfläche (10) einen Aufbau aufweist, der aus der Gruppe ausgewählt ist, die aus einem Gewebe, einem Gewirke, einem Vlies, einem beflockten Substrat, einem Schlingenflor, einem mehrstufigen Schlingenflor, einem Schnittflor und einer Kombination aus Schlingen- und Schnittflor besteht.

6. Verfahren zum Erzeugen einer waschbaren Bodenmatte mit einer Vielzahl an abrasiven gemusterten Bereichen, wobei das Verfahren umfasst:
(a) Bereitstellen eines Textilsubstrats mit einer Vielzahl an Garnen;
(b) selektives Aufbringen von erwärmten Luftströmen auf einen Abschnitt der Garne des Substrats, um die Garne in einer mustermäßigen Anordnung thermisch zu modifizieren, wobei die thermische Modifikation ein Schrumpfen und Schmelzen der Garne umfasst, derart dass ein Ball aus wiederaufgeschmolzenem Polymer an den Enden der Garne ausgebildet wird;
(c) Zertrennen des gemusterten Textilsubstrats in gewünschte Abmessungen; und
(d) Aufbringen einer Stützschicht auf das gemusterte Textilsubstrat, wobei die Stützschicht ein Bogenmaterial ist, das aus der Gruppe ausgewählt ist, die aus Gummi, Polyvinylchlorid und Gummibruch besteht, das an die obere Textiloberfläche durch ein Bindemittel angehaftet ist.

7. Verfahren nach Anspruch 6, wobei das Textilsubstrat einen Aufbau aufweist, der aus der Gruppe ausgewählt ist, die aus einem Gewebe, einem Gewirke, einem Vlies, einem beflockten Substrat, einem Schlingenflor, einem mehrstufigen Schlingenflor, einem Schnittflor und einer Kombination aus Schlingen- und Schnittflor besteht.

8. Verfahren nach Anspruch 6 oder 7, wobei die Garne zumindest eines von synthetischen Multifilament-Garnen, die vorzugsweise lösungsgefärbte Garne sind, und Wollgarnen sind.

9. Verfahren nach einem der Ansprüche 6 bis 8, wobei die Luftströme auf Temperaturen zwischen ungefähr 190°C und 538°C (ungefähr 375°F und 1.000°F) erwärmt werden.

10. Verfahren nach einem der Ansprüche 6 bis 8, wobei die Luftströme auf Temperaturen zwischen ungefähr 232°C und 454°C (ungefähr 450°F und 850°F) erwärmt werden.

11. Verfahren nach einem der Ansprüche 6 bis 10, wobei das Textilsubstrat vor Schritt (b) gefärbt oder bedruckt und/oder nach Schritt (b) gefärbt oder bedruckt wird.

12. Verfahren nach einem der Ansprüche 6 bis 11, wobei die Stützschicht in einer Vulkanisierungskammer unter Wärme und Druck aufgebracht wird.

## Revendications

1. Natte de plancher à motifs (2), ladite natte (2) comprenant :
(a) une surface supérieure de textile (10) présentant plusieurs zones à motifs (14), lesdites zones à motifs comprenant des fils (8) qui ont été thermiquement modifiés ; et
(b) une couche arrière (6, 16, 28) constituée d'un matériau durable flexible,
dans laquelle ladite surface supérieure de textile (10) et ladite couche arrière (6, 16, 28) sont liées ensemble,
**caractérisée en ce que** ladite couche arrière (6, 16, 28) est un matériau de feuille choisi dans le groupe constitué de caoutchouc, de poly(chlorure de vinyle), et de caoutchouc granulé qui est collé à ladite surface supérieure de textile par un liant,
et **en ce que**, en raison de la modification thermique, au moins une partie desdits fils (8) contient des fibres qui présentent une bille de polymère refondu sur l'extrémité des fibres.

2. Natte de plancher à motifs selon la revendication 1, dans laquelle la surface supérieure de textile (10) comprend au moins un de fils de laine, de fils synthétiques multi-filaments qui sont de préférence des fils séchés en solution, et d'une combinaison de fils synthétiques et de fils de laine.

3. Natte de plancher à motifs selon la revendication 1 ou 2, dans laquelle ladite surface supérieure de textile (10) a été teinte.

4. Natte de plancher à motifs selon l'une quelconque des revendications 1 à 3, dans laquelle ladite natte de plancher à motifs (2) est lavable.

5. Natte de plancher à motifs selon l'une quelconque des revendications 1 à 4, dans laquelle ladite surface supérieure de textile (10) présente une construction choisie dans le groupe constitué d'un textile tissé, d'un textile tricoté, d'un textile non tissé, d'un substrat floqué, d'un poil bouclé, d'un poil bouclé multi-niveau, d'un poil coupé, et d'une combinaison de poils bouclé et coupé.

6. Procédé de création d'une natte de plancher lavable présentant plusieurs zones à motifs abrasives, ledit procédé comprenant :
(a) la fourniture d'un substrat de textile comprenant plusieurs fils ;
(b) l'application sélective de courants chauffés d'air à une partie desdits fils dudit substrat pour modifier thermiquement lesdits fils dans une disposition de motifs, où la modification thermique comprend le rétrécissement et la fusion desdits fils de sorte qu'une bille de polymère refondu est formée sur les extrémités des fils ;
(c) la découpe dudit substrat de textile à motifs aux dimensions souhaitées ; et
(d) l'application d'une couche arrière audit substrat de textile à motifs, dans lequel ladite couche arrière est un matériau de feuille choisi dans le groupe constitué de caoutchouc, de poly(chlorure de vinyle), et de caoutchouc granulé qui est collé à ladite surface supérieure de textile par un liant.

7. Procédé selon la revendication 6, dans lequel ledit substrat de textile présente une construction choisie dans le groupe constitué d'un textile tissé, d'un textile tricoté, d'un textile non tissé, d'un substrat floqué, d'un poil bouclé, d'un poil bouclé multi-niveau, d'un poil coupé, et d'une combinaison de poils bouclé et coupé.

8. Procédé selon la revendication 6 ou 7, dans lequel lesdits fils sont au moins un de fils synthétiques multi-filaments qui sont de préférence des fils teints en solution, et des fils de laine.

9. Procédé selon l'une quelconque des revendications 6 à 8, dans lequel lesdits courants d'air sont chauffés à des températures entre environ 190 °C et 538 °C (environ 375 °F et 1 000 °F).

10. Procédé selon l'une quelconque des revendications 6 à 8, dans lequel lesdits courants d'air sont chauffés à des températures entre environ 232 °C et 454 °C (environ 450 °F et 850 °F).

11. Procédé selon l'une quelconque des revendications 6 à 10, dans lequel ledit substrat de textile est au moins un de teint ou d'imprimé avant l'étape (b), et de teint ou d'imprimé après l'étape (b).

12. Procédé selon l'une quelconque des revendications 6 à 11, dans lequel ladite couche arrière est appliquée dans une chambre de vulcanisation sous chaleur et pression.
